# EUROPÄISCHE PATENTANMELDUNG

(11) **EP 2 431 146 A1**
(43) Veröffentlichungstag der Anmeldung: **21.03.2012**
(21) Anmeldenummer: 10177111.1
(22) Anmeldetag: 16.09.2010
(51) Int. Cl.: B29C 37/02, B29C 45/00

(54) **Vorrichtung und Verfahren zum berührungsfreien Entgraten von Kunststoffteilen**

(71) Anmelder: Odelo GmbH, 71409 Schwaikheim (DE)
(72) Erfinder: Ricking, Thorsten, 71364 Winnenden (DE); Kutterer, Achim, 70197 Stuttgart (DE)
(74) Vertreter: Benninger, Johannes

(57) **Zusammenfassung**

Es werden eine Vorrichtung (10) und ein Verfahren zum berührungsfreien Entgraten von im Spritzgießverfahren oder im Spritzprägeverfahren hergestellten Kunststoffteilen (01) mit einer Infrarotquelle (11) beschrieben. Die von der Infrarotquelle (11) emittierte Infrarot-Strahlung ist in Ihrer Wellenlänge derart auf die Absorptionseigenschaften des Werkstoffs des zu entgratenden Kunststoffteils (01) angepasst, dass das Maximum der von der Infrarotquelle (11) abgestrahlten Energie bei einer Wellenlänge liegt, für die der Werkstoff des Kunststoffteils (01) ein Absorptionsmaximum im Infrarot-Bereich aufweist.

## Beschreibung

Die Erfindung betrifft eine Vorrichtung und ein Verfahren zum berührungsfreien Entgraten von im Spritzgießverfahren oder im Spritzprägeverfahren hergestellten Kunststoffteilen gemäß dem Oberbegriff des Anspruchs 1 bzw. gemäß dem Oberbegriff des Anspruchs 12.

Bei der Herstellung von Kraftfahrzeugen und Kraftfahrzeugteilen werden immer häufiger Kunststoffteile eingesetzt. Gründe hierfür sind beispielsweise deren geringes Gewicht, deren elektrisch isolierenden Eigenschaften und nicht zuletzt deren beliebige Form- und Farbgestaltung bis hin zu deren konfigurierbaren optischen Eigenschaften, wie z.B. deren gewünschter oder erforderlicher Transparenz.

Ein Beispiel für ein mehr und mehr aus Kunststoffteilen bestehendes Kraftfahrzeugteil ist eine Kraftfahrzeugleuchte. Eine Kraftfahrzeugleuchte erfüllt je nach Ausgestaltung eine oder mehrere Aufgaben bzw. Funktionen, wie beispielsweise bei einer Ausgestaltung als Scheinwerfer eine die Fahrbahn ausleuchtende Funktion, oder bei einer Ausgestaltung als Signalleuchte eine Signalfunktion, wie beispielsweise zur Fahrtrichtungsanzeige oder Anzeige einer Bremstätigkeit, oder einer Sicherstellung einer Sichtbarkeit des Kraftfahrzeugs bei Tag und/oder Nacht, wie etwa bei einer Ausgestaltung als Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine Kraftfahrzeugleuchte besteht im Wesentlichen aus einem Gehäuse, einem darin angeordneten Leuchtmittel, gegebenenfalls einem typischerweise hinter dem Leuchtmittel in dem Gehäuse angeordneten Reflektor und/oder einem vor dem Leuchtmittel angeordnete Optikelement, wie etwa einer Linse, einem Rinnenkonzentrator, z.B. einer Parabolrinne (CPC; Compound Parabolic Concentrator) oder dergleichen zur Ausformung einer definierten Abstrahlcharakteristik, sowie einer das Leuchtmittel und gegebenenfalls den Reflektor bzw. das Optikelement gegen Witterungseinflüsse schützenden, kurz auch als Lichtscheibe bezeichneten transparenten Abdeckung. Die Lichtscheibe umschließt gemeinsam mit dem Gehäuse einen das Leuchtmittel und gegebenenfalls den Reflektor aufnehmenden Leuchteninnenraum. In dem Leuchteninnenraum kann zwischen Leuchtmittel und Lichtscheibe eine Optikscheibe angeordnet sein, welche beispielsweise eine bestimmte Struktur und/oder Maskierung aufweisen kann, beispielsweise um bei einer klaren, für einen Betrachter eine Tiefenwirkung bewirkenden Lichtscheibe das Leuchtmittel zu kaschieren. Das Gehäuse bzw. der Leuchteninnenraum kann dabei in mehrere Kammern mit jeweils eigenen Leuchtmitteln, eventuell Reflektoren und/oder Optikscheiben, sowie gegebenenfalls Lichtscheiben unterteilt sein, von denen mehrere Kammern gleiche oder jede Kammer eine andere der oben beschriebenen Funktionen erfüllen kann.

Von den genannten Bauteilen Gehäuse, Reflektor, Optikelement Lichtscheibe, Optikscheibe, kann grundsätzlich jedes, beispielsweise alle, als Kunststoffteil ausgebildet sein.

Als Leuchtmittel kommen beispielsweise Glühlampen, Gasentladungslampen und vermehrt auch einzeln oder gruppenweise angeordnete Leuchtdioden zum Einsatz. Letztere bestehen aus einem Lichtemittierende-Diode-Halbleiter-Chip, kurz LED-Chip, sowie einer beispielsweise durch Spritzgießen angeformten, den LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht mehr zwischen Leuchtdiode und LED-Chip unterschieden und statt dessen einheitlich der Begriff LED stellvertretend für beide Ausgestaltungen verwendet, es sei denn, es wird explizit etwas anderes erwähnt.

In Verbindung mit allen genannten Leuchtmitteln ist außerdem bekannt, Lichtleiter vorzusehen. Letztere werden häufig ebenfalls als Kunststoffteile aus einem Licht leitenden, transparenten Kunststoff hergestellt.

Kunststoffteile, wie beispielsweise Griffe, Gehäuseteile, Abdeckungen, Blenden, Optikscheiben, Lichtleiter und Lichtscheiben aus Kunststoff werden häufig im Spritzgießverfahren oder im Spritzprägeverfahren hergestellt. Dabei ist das Entstehen von scharfkantigen Graten, beispielsweise an der Werkzeugtrennebene, nicht immer zu verhindern. Dieser Grat kann geometrisch, z.B. durch Werkzeugtrennungen bedingt sein oder auch Überspritzungen resultierend aus dem Spritzgieß- oder Spritzprägeprozess sein.

Vor allem bei komplizierten und dreidimensional geformten Teilen kann die Entfernung der Grate vor der Weiterverarbeitung kompliziert und damit zeit- und kostenintensiv sein.

Zum Entgraten von Kunststoffteilen ist die Verwendung von Heißluft oder einer Plasmaflamme bekannt. Dabei wird das Kunststoffteil mittels Industrieroboter in die Heißluftströmung oder in die Plasmaflamme gehalten und entlang dem zu entfernenden Grat bzw. entlang der den Grat aufweisenden Kontur so geführt, dass nach und nach der gesamte Grat mit der Heißluftströmung oder der Plasmaflamme in Kontakt kommt und abschmelzt. Die den Grat aufweisende Kontur wird dabei durch zumindest eine Partie einer Fläche gebildet, auf der am noch nicht entgrateten Kunststoffteil ein Grat auf- oder absteht, oder auf der ein auf- oder abstehender Grat zu erwarten ist bzw. auf der bei einer Serie gleichartiger Kunststoffteile ein Grat auf- oder abstehen kann. Diese Vorgehensweise zur Entgratung weist den Nachteil einer großflächigen Wärmeeinwirkung auf. Beispielsweise bei Lichtscheiben hat dies etwa bei vorhandenen Rückstrahlern negative Auswirkungen aufgrund einer Herabsetzung der Lichtwerte durch thermische Schädigung. Ein weiterer Nachteil der beschriebenen Vorgehensweise ist, dass ein Satz Kunststoffteile, beispielsweise ein Satz Lichtscheiben, nur sequenziell hintereinander bearbeitet werden kann. Hierdurch entsteht eine hohe Zykluszeit für das Entgraten, welche die Spritzgieß- oder Spritzprägezykluszeit je nach Geometrie des Kunststoffteils, z.B. einer Lichtscheibe, überschreiten kann. Die damit verbundene Teilepreiserhöhung hat Kostennachteile bei der Herstellung der Kunststoffteile zur Folge. Ein zusätzlicher Nachteil ergibt sich durch den notwendigen Einsatz zusätzlicher Industrieroboter, wodurch hohe Kosten für die Einrichtung einer Anlage zum Entfernen der Grate bedingt sind. Darüber hinaus ist eine beispielsweise bezüglich des Brandschutzes und der Arbeitsplatzsicherheit erforderliche Prozessicherheit beim Umgang mit einer Heißluftströmung oder einer Plasmaflamme nicht ohne weiteres gewährbar.

Aus den genannten Nachteilen ist die Verwirklichung eines Entgratens mittels Heißluft oder Plasmaflamme in der Serienfertigung problematisch.

Konventionelle Methoden, wie beispielsweise das manuelle Entgraten, etwa mit ist speziellen Messern, liefern demgegenüber keine gleichförmige und reproduzierbare Ergebnisse und kosten häufig viel Zeit.

Durch DE 199 57 042 C2 ist bekannt, zum Umformen thermoplastischer und thermoelastischer Halbzeuge diese zunächst berührungsfrei mittels Strahlung bis zum Erreichen einer Umformtemperatur zu erwärmen und anschließend mechanisch umzuformen. Hierzu ist ein in einem gewendelten Quarzrohr angeordneter Widerstandsdraht vorgesehen.

Durch DE 199 12 544 B4 ist ein Infrarotstrahler bekannt, der aus einem in einem Quarzrohr angeordneten Karbonbändchen besteht. Da gemäß dem Stefan-Boltzmann-Gesetz die Strahlungsleistung eines Körpers mit der vierten Potenz seiner Temperatur zu- bzw. abnimmt, ist vorgesehen, das Karbonbändchen 1,5 mal länger auszubilden, als die Länge des Quarzrohrs, um auch bei geringeren Temperaturen eine hohe Emissionsleistung zu erhalten. Die Wellenlänge der emittierten Strahlung liegt dabei im Bereich von 1800 nm bis 2900 nm im Vergleich zu einem Wellenlängenbereich von 900 nm bis 1800 nm eines Infrarotstrahlers mit identischer Emissionsleistung und einem Karbonbändchen, das gleich lang, wie das Quarzrohr ist.

Durch DE 196 09 151 A1 ist ein Infrarotstrahler bekannt, der zur Bestrahlung eines Kunststoffs mit diesem in Kontakt gebracht wird. Um ein Anhaften des Kunststoffs am Infrarotstrahler zu vermeiden, ist dieser mit einer Antihaftbeschichtung versehen.

Durch DE 103 13 521 B4 ist bekannt, ein Kunststoff-Bauteil mittels Laserstrahlung zu entgraten. Nachteilig hieran ist die erforderliche genaue Führung und Ausrichtung des Laserstrahls entlang und auf den zu entfernenden Grat.

Durch DE 10 2005 034 627 A1 ist schließlich bekannt, einen Grat eines Werkstücks aus Kunststoff oder Leichtmetall, wie etwa Aluminium oder Magnesium, berührungsfrei zu entfernen, indem Energie in den Grat eingebracht wird, wodurch dieser schmilzt oder verbrennt. Die Energiequelle erstreckt sich hierbei längs eines sich ebenfalls längs erstreckenden Grats. Dadurch kann auf eine aufwändige Führung eines Entgratungswerkzeugs entlang des Grats verzichtet werden. Die Energiequelle kann als Infrarot-Strahler ausgebildet sein.

Eine Aufgabe der Erfindung ist es, eine Vorrichtung und ein Verfahren zum berührungsfreien Entgraten von im Spritzgießverfahren oder im Spritzprägeverfahren hergestellten Kunststoffteilen anzugeben, mit denen ein kostengünstiges, zeit- und energiesparendes Entgraten möglich ist.

Die Aufgabe wird gelöst durch eine Vorrichtung mit den Merkmalen des Anspruchs 1 bzw. durch ein Verfahren mit den Merkmalen des Anspruchs 12.

Ein erster Gegenstand der Erfindung betrifft demnach eine Vorrichtung zum berührungsfreien Entgraten von im Spritzgießverfahren oder im Spritzprägeverfahren hergestellten Kunststoffteilen mit einer Infrarotquelle. Die von der Infrarotquelle emittierte Infrarot-Strahlung ist in Ihrer Wellenlänge derart auf die Absorptionseigenschaften des Werkstoffs des zu entgratenden Kunststoffteils abgestimmt bzw. optimiert bzw. angepasst, dass das Maximum der von der Infrarotquelle abgestrahlten Energie bei einer Wellenlänge liegt, für die der Werkstoff des Kunststoffteils ein Absorptionsmaximum im Infrarot-Bereich aufweist.

Die Geometrie der Infrarotquelle kann konturfolgend gestaltet sein. Somit ist eine schnelle Entgratung des Kunststoffteils nach Einbringung in eine geeignete Aufnahme in einem Schritt möglich, ohne dass das Kunststoffteil an der Energiequelle vorbeigeführt werden muss.

Bevorzugt weist die Infrarotquelle eine Geometrie auf, welche beispielsweise in ihrer Projektion auf die mindestens eine Partie der wenigstens einen zumindest einen Grat aufweisenden Fläche des Kunststoffteils zumindest eine Partie bzw. einen Abschnitt der wenigstens einen Fläche abdeckt, auf der das Kunststoffteil einen Grat aufweist oder aufweisen kann.

Die Infrarotquelle kann beispielsweise eine zumindest entlang einer Partie bzw. eines Abschnitts der wenigstens einen Fläche dem Grat folgende Geometrie aufweisen, so dass sich die Infrarotquelle wenigstens entlang der Partie bzw. des Abschnitts der Fläche entlang dem Grat ausdehnt bzw. erstreckt.

Vorzugsweise weist die Infrarotquelle eine einem zweidimensionalen Verlauf eines Grats bzw. zumindest einer Partie wenigstens einer Fläche, auf der das Kunststoffteil wenigstens einen Grat aufweist, konturfolgende Ausdehnung bzw. Erstreckung auf. Durch die zweidimensionale, konturfolgende Ausdehnung bzw. Erstreckung der Infrarotquelle folgt diese einem zweidimensionalen Verlauf eines Grats bzw. ist einem solchen Verlauf angepasst.

Alternativ kann die Infrarotquelle eine einem dreidimensionalen Verlauf eines Grats bzw. zumindest einer Partie wenigstens einer Fläche, auf der das Kunststoffteil wenigstens einen Grat aufweist, konturfolgende Ausdehnung bzw. Erstreckung aufweisen. Durch die dreidimensionale, konturfolgende Ausdehnung bzw. Erstreckung der Infrarotquelle folgt diese einem dreidimensionalen Verlauf eines Grats bzw. ist einem solchen Verlauf angepasst.

Unter dem Begriff konturfolgend bzw. gratfolgend ist hierbei zu verstehen, dass die Infrarotquelle eine Geometrie aufweist, welche zumindest eine Partie einer Fläche abdeckt, auf der am noch nicht entgrateten Kunststoffteil ein Grat auf- oder absteht, oder auf der ein auf- oder abstehender Grat zu erwarten ist bzw. auf der ein Grat auf- oder abstehen kann.

Zwischen der Infrarotquelle und der mindestens einen Partie der wenigstens einen Fläche, welche den Grat aufweist, wird vorzugsweise an jeder Stelle der selbe senkrechte Abstand zwischen der Infrarotquelle und der Fläche eingehalten. Hierdurch wird ein definierter und gleichmäßiger Wärmeeintrag in den Grat und in die aus Sicht der Infrarotquelle darunterliegende Fläche sichergestellt.

Besonders bevorzugt besteht das zu entgratende Kunststoffteil aus einem zumindest im für das menschliche Auge sichtbaren Wellenlängenbereich transparenten Kunststoff.

Beispielsweise kann es sich bei dem Werkstoff des Kunststoffteils um PMMA (PMMA: Polymethylmethacrylat) handeln. Alternativ kann der Werkstoff des Kunststoffteils zumindest PMMA umfassen.

Bevorzugt wird mittlere Infrarotstrahlung (MIR; Middle Infra Red) für das berührungsfreie Entgraten genutzt.

Beispielsweise ist eine Wellenlänge von über 2000nm, besonders bevorzugt von über 2250nm besonders geeignet, um das erfindungsgemäße berührungsfreie Entgraten durchzuführen.

Besonders bevorzugt sieht das erfindungsgemäße berührungsfreie Entgraten einen Wellenlängenbereich mit Wellenlängen von 2000nm bis 7700nm, bevorzugt zwischen 2000nm und 2700nm, besonders bevorzugt zwischen 2200nm und 2500nm vor.

Ein zweiter Gegenstand der Erfindung betrifft ein Verfahren zum berührungsfreien Entgraten von im Spritzgießverfahren oder im Spritzprägeverfahren hergestellten Kunststoffteilen mittels Infrarot-Strahlung. Das Verfahren sieht vor, dass die Infrarot-Strahlung in Ihrer Wellenlänge derart auf die Absorptionseigenschaften des Werkstoffs des zu entgratenden Kunststoffteils abgestimmt bzw. optimiert bzw. angepasst ist, dass das Maximum der Energie der Infrarot-Strahlung bei einer Wellenlänge liegt, für die der Werkstoff des Kunststoffteils ein Absorptionsmaximum im Infrarot-Bereich aufweist. Die Wellenlänge der Infrarot-Strahlung kann in einem Wellenlängenbereich von 2000nm bis 7700nm, bevorzugt zwischen 2000nm und 2700nm, besonders bevorzugt zwischen 2200nm und 2500nm liegen. Das zu entgratende Kunststoffteil ist besonders bevorzugt aus einem transparenten Werkstoff hergestellt.

Es ist ersichtlich, dass die Erfindung beispielsweise verwirklicht werden kann, indem ein im Spritzgieß- oder im Spritzprägeverfahren hergestelltes, transparentes Kunststoffteil, wie etwa eine Lichtscheibe, eine Optikscheibe, eine Primäroptik oder ein Lichtleiter mittels Infrarot-Strahlung berührungsfrei entgratet wird. Die Infrarot-Strahlung ist dabei in Ihrer Wellenlänge bevorzugt derart optimiert, dass das Maximum der abgestrahlten Energie bei einer Wellenlänge liegt, für die der zumindest im für das menschliche Auge sichtbaren Wellenlängenbereich transparente Werkstoff des Kunststoffteils ein Absorptionsmaximum im Infrarot-Bereich aufweist.

Beispielsweise für PMMA liegt die Wellenlänge bevorzugt z.B. in einem Bereich oberhalb 2000nm, besonders bevorzugt oberhalb 2250nm. Ein geeigneter Wellenlängenbereich für das Entgraten von Werkstücken aus transparentem Kunststoff (PMMA), wie etwa von Lichtscheiben, liegt beispielsweise zwischen 2000 und 2700nm, z.B. zwischen 2200 und 2500nm. Ebenfalls scheint ein Wellenlängenbereich geeignet, der nach dem Wienschen Verschiebungsgesetz in einem Temperaturbereich von etwa 100 bis 1000 °C liegt, entsprechend Wellenlängen zwischen 7700nm und 2200nm. Hieraus ist ersichtlich, dass insbesondere Wellenlängenbereiche des mittleren Infrarot vorgesehen sind, um ein Werkstück aus transparentem Kunststoff zu entgraten.

Vorteile der Erfindung gegenüber dem Stand der Technik ergeben sich insbesondere dadurch, dass der Einsatz beispielsweise eines konturfolgenden InfrarotStrahlers als Infrarotquelle eine vergleichsweise preiswerte Lösung ist verglichen mit einer Entlangführung entweder eines Lasers entlang des Kunststoffteils oder des Kunststoffteils entlang einer Heißluftströmung oder einer Plasmaflamme. Weitere Vorteile der Erfindung gegenüber dem Stand der Technik ergeben sich durch eine geringe Zykluszeit zur Engratung. Die Zykluszeit zur Entgratung ist durch die Möglichkeit der Bestrahlung der gesamten Kontur in einem einzigen Schritt gering gegenüber einem Energieeintrag entlang der Kontur, wie bei einer Heißluft- bzw.

### Plasmaflammenanwendung.

Ein besonders hervorzuhebender Vorteil der Erfindung gegenüber dem Stand der Technik ist, dass aufgrund der Anpassung der Wellenlänge der Infrarotstrahlung an die Absorptionseigenschaften des zu entgratenden Kunststoffteils wesentlich weniger Energie aufgewendet werden muss, als beispielsweise bei Verwendung eines Infrarotstrahlers mit einem Wellenlängenbereich im nahen Infrarot benötigt. Dies ist dadurch bedingt, dass insbesondere Kunststoffteile aus einem zumindest im für das menschliche Age sichtbaren Bereich transparenten Werkstoff für den von den meisten Infrarotquellen ausgestrahlten Wellenlängenbereich weitestgehend transparent sind. Um z.B. eine Lichtscheibe zu entgraten muss mit diesen Infrarotstrahlern insgesamt weit mehr Energie ausgestrahlt werden, als grundsätzlich notwendig wäre, was zu langen Einwirkungs- bzw. Bearbeitungszeiten und hohen Kosten führt. Darüber hinaus geht der größte Teil der ausgestrahlten Energie verloren, da er in einem Wellenlängenbereich liegt, der das Kunststoffteil weitestgehend ungehindert durchdringt.

Die Erfindung wird nachfolgend anhand von in der Zeichnung dargestellten Ausführungsbeispielen näher erläutert. Darin bezeichnen gleiche Bezugszeichen gleiche oder gleich wirkende Elemente.

Es zeigt in schematischer Darstellung:

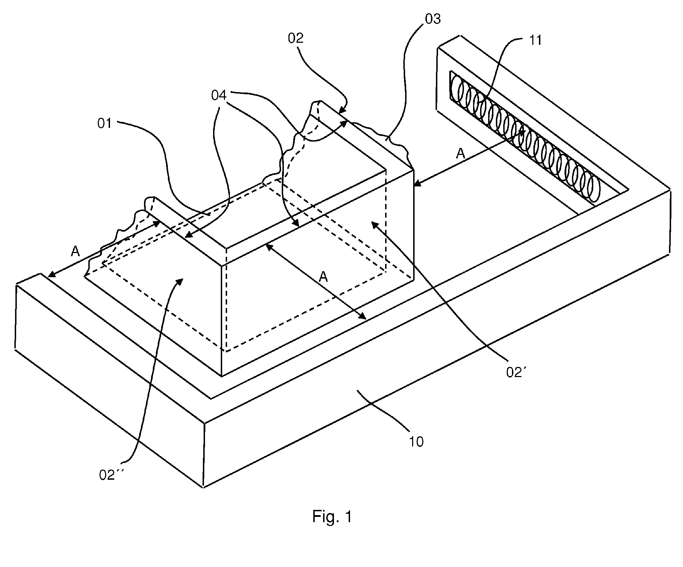

- Fig. 1: eine Vorrichtung zum berührungsfreien Entgraten eines im Spritzgießverfahren oder im Spritzprägeverfahren hergestellten Kunststoffteils mittels einer Infrarotquelle, wobei das Kunststoffteil auf einer Partie einer Fläche einen Grat aufweist, in perspektivischer Ansicht.

Ein in Fig. 1 gezeigtes, beispielsweise im Spritzgieß- oder im Spritzprägeverfahren hergestelltes Kunststoffteil 01 weist an einer Partie einer Fläche 02 einen Grat 03 auf. Im Spritzgieß- oder im Spritzprägeverfahren ist das Entstehen von Graten 03, beispielsweise an der Werkzeugtrennebene, nicht immer zu verhindern. Dieser Grat 03 kann geometrisch, z.B. durch Werkzeugtrennungen bedingt sein oder auch Überspritzungen resultierend aus dem Spritzgieß- oder Spritzprägeprozess sein. Das Kunststoffteil 01 ist beispielsweise aus einem zumindest im für das menschliche Auge sichtbaren Wellenlängenbereich transparenten Werkstoff hergestellt.

Das Kunststoffteil 01 verfügt über eine den Grat 03 aufweisende Kontur 04, welche sich aus den zusammenhängenden Partien der Flächen 02, 02', 02" zusammensetzt, auf bzw. entlang denen am noch nicht entgrateten Kunststoffteil 01 ein Grat 03 auf- oder absteht, oder auf der ein auf- oder abstehender Grat 03 zu erwarten ist bzw. auf der bei einer Serie gleichartiger Kunststoffteile 01 ein Grat 03 auf- oder abstehen kann.

Um ein solches Kunststoffteil 01 zu entgraten ist eine ebenfalls in Fig. 1 gezeigte Vorrichtung 10 zum berührungsfreien Entgraten von im Spritzgießverfahren oder im Spritzprägeverfahren hergestellten Kunststoffteilen 01 mit einer Infrarotquelle 11 1 vorgesehen. Die von der Infrarotquelle 11 emittierte Infrarot-Strahlung ist in Ihrer Wellenlänge derart auf die Absorptionseigenschaften des Werkstoffs des zu entgratenden Kunststoffteils 01 angepasst, dass das Maximum der von der Infrarotquelle 11 abgestrahlten Energie bei einer Wellenlänge liegt, für die der Werkstoff des Kunststoffteils 01 ein Absorptionsmaximum im Infrarot-Bereich aufweist.

Zwischen der Infrarotquelle 11 und der mindestens einen Partie der wenigstens einen Fläche 02, welche den Grat 03 aufweist, bzw. der Fläche 02, 02', 02", welche einen Grat 03 aufweisen kann, wird vorzugsweise an jeder Stelle der selbe durch Doppelpfeile A dargestellte senkrechte Abstand zwischen der Infrarotquelle 11 und der Fläche 02, 02', 02" eingehalten. Hierdurch wird ein definierter und gleichmäßiger Wärmeeintrag in den Grat 03 und in die aus Sicht der Infrarotquelle 11 darunterliegende Fläche 02, 02', 02" sichergestellt.

Die Erfindung ist insbesondere im Bereich der Herstellung und Verarbeitung von Kunststoffteilen insbesondere für Kraftfahrzeuge und Kraftfahrzeugteile gewerblich anwendbar.

### Bezugszeichenliste

- 01: Kunststoffteil
- 02: Fläche
- 03: Grat
- 10: Vorrichtung
- 11: Infrarotquelle
- A: Abstand

## Patentansprüche

1. Vorrichtung (10) zum berührungsfreien Entgraten von im Spritzgießverfahren oder im Spritzprägeverfahren hergestellten Kunststoffteilen (01) mit einer Infrarotquelle (11), **dadurch gekennzeichnet, dass** die von der Infrarotquelle (11) emittierte Infrarot-Strahlung in Ihrer Wellenlänge derart auf die Absorptionseigenschaften des Werkstoffs des zu entgratenden Kunststoffteils (01 ) angepasst ist, dass das Maximum der von der Infrarotquelle (11) abgestrahlten Energie bei einer Wellenlänge liegt, für die der Werkstoff des Kunststoffteils (01 ) ein Absorptionsmaximum im Infrarot-Bereich aufweist.

2. Vorrichtung nach Anspruch 1, **dadurch gekennzeichnet, dass** die Infrarotquelle (11) eine Geometrie aufweist, welche zumindest eine Partie der wenigstens einen Fläche (02, 02', 02") abdeckt, auf der das Kunststoffteil (01 ) wenigstens einen Grat (03) aufweist.

3. Vorrichtung nach Anspruch 1 oder 2, **dadurch gekennzeichnet, dass** die Infrarotquelle (11) eine zumindest entlang einer Partie der wenigstens einen Fläche (02, 02', 02") dem Grat (03) folgende Geometrie aufweist, so dass sich die Infrarotquelle (11) wenigstens entlang der Partie der Fläche (02, 02', 02") entlang dem Grat (03) ausdehnt.

4. Vorrichtung nach Anspruch 1, 2 oder 3, **gekennzeichnet durch** eine zweidimensionale, konturfolgende (04) Ausdehnung der Infrarotquelle (11).

5. Vorrichtung nach Anspruch 1, 2 oder 3, **gekennzeichnet durch** eine dreidimensionale, konturfolgende (04) Ausdehnung der Infrarotquelle (11).

6. Vorrichtung nach Anspruch 3, 4 oder 5, **gekennzeichnet durch** einen gleichmäßigen senkrechten Abstand (A) zwischen der Infrarotquelle (11) und der mindestens einen Partie der wenigstens einen Fläche (02, 02', 02"), welche den Grat (03) aufweist.

7. Vorrichtung nach einem der vorhergehenden Ansprüche, **dadurch gekennzeichnet, dass** das zu entgratende Kunststoffteil (01) aus einem zumindest im für das menschliche Auge sichtbaren Wellenlängenbereich transparenten Kunststoff hergestellt ist.

8. Vorrichtung nach einem der vorhergehenden Ansprüche, **dadurch gekennzeichnet, dass** der Werkstoff des Kunststoffteils PMMA (PMMA: Polymethylmethacrylat) ist oder zumindest umfasst.

9. Vorrichtung nach einem der vorhergehenden Ansprüchen, **gekennzeichnet durch** eine Nutzung mittlerer Infrarotstrahlung (MIR; Middle Infra Red) für das berührungsfreie Entgraten.

10. Vorrichtung nach Anspruch 9, **gekennzeichnet durch** eine Wellenlänge von über 2000nm, besonders bevorzugt von über 2250nm.

11. Vorrichtung nach Anspruch 10, **gekennzeichnet durch** eine Wellenlänge in einem Wellenlängenbereich von 2000nm bis 7700nm, bevorzugt zwischen 2000nm und 2700nm, besonders bevorzugt zwischen 2200nm und 2500nm.

12. Verfahren zum berührungsfreien Entgraten von im Spritzgießverfahren oder im Spritzprägeverfahren hergestellten Kunststoffteilen (01) mittels Infrarot-Strahlung, **dadurch gekennzeichnet, dass** die Infrarot-Strahlung in Ihrer Wellenlänge derart auf die Absorptionseigenschaften des Werkstoffs des zu entgratenden Kunststoffteils (01 ) angepasst ist, dass das Maximum der Energie der Infrarot-Strahlung bei einer Wellenlänge liegt, für die der Werkstoff des Kunststoffteils (01 ) ein Absorptionsmaximum im Infrarot-Bereich aufweist.

13. Verfahren nach Anspruch 12, **dadurch gekennzeichnet, dass** die Wellenlänge der Infrarot-Strahlung in einem Wellenlängenbereich von 2000nm bis 7700nm, bevorzugt zwischen 2000nm und 2700nm, besonders bevorzugt zwischen 2200nm und 2500nm liegt.

14. Verfahren nach Anspruch 12 oder 13, **dadurch gekennzeichnet, dass** das zu entgratende Kunststoffteil (01) aus einem transparenten Werkstoff hergestellt ist.

## Geänderte Patentansprüche

### Geänderte Patentansprüche gemäss Regel 137(2) EPÜ.

**1.** Vorrichtung (10) zum berührungsfreien Entgraten von im Spritzgießverfahren oder im Spritzprägeverfahren hergestellten Kunststoffteilen (01) aus einem zumindest im für das menschliche Auge sichtbaren Wellenlängenbereich transparenten Kunststoff mit einer Infrarotquelle (11), wobei der Werkstoff des Kunststoffteils PMMA (PMMA: Polymethylmethacrylat) ist oder zumindest umfasst,
**dadurch gekennzeichnet,**
**dass** die von der Infrarotquelle (11) emittierte Infrarot-Strahlung in Ihrer Wellenlänge derart auf die Absorptionseigenschaften des Werkstoffs des zu entgratenden Kunststoffteils (01) angepasst ist, dass das Maximum der von der Infrarotquelle (11) abgestrahlten Energie bei einer Wellenlänge liegt, für die der Werkstoff des Kunststoffteils (01) ein Absorptionsmaximum im Infrarot-Bereich aufweist.

**2.** Vorrichtung nach Anspruch 1,
**dadurch gekennzeichnet,**
**dass** die Infrarotquelle (11) eine Geometrie aufweist, welche zumindest eine Partie der wenigstens einen Fläche (02, 02', 02") abdeckt, auf der das Kunststoffteil (01) wenigstens einen Grat (03) aufweist.

**3.** Vorrichtung nach Anspruch 1 oder 2,
**dadurch gekennzeichnet,**
**dass** die Infrarotquelle (11) eine zumindest entlang einer Partie der wenigstens einen Fläche (02, 02', 02") dem Grat (03) folgende Geometrie aufweist, so dass sich die Infrarotquelle (11) wenigstens entlang der Partie der Fläche (02, 02', 02") entlang dem Grat (03) ausdehnt.

**4.** Vorrichtung nach Anspruch 1, 2 oder 3
**gekennzeichnet durch**
eine zweidimensionale, konturfolgende (04) Ausdehnung der Infrarotquelle (11).

**5.** Vorrichtung nach Anspruch 1, 2 oder 3,
**gekennzeichnet durch**
eine dreidimensionale, konturfolgende (04) Ausdehnung der Infrarotquelle (11).

**6.** Vorrichtung nach Anspruch 3, 4 oder 5
**gekennzeichnet durch**
einen gleichmäßigen senkrechten Abstand (A) zwischen der Infrarotquelle (11) und der mindestens einen Partie der wenigstens einen Fläche (02, 02', 02"), welche den Grat (03) aufweist.

**7.** Vorrichtung nach einem der vorhergehenden Ansprüchen,
**gekennzeichnet durch**
eine Nutzung mittlerer Infrarotstrahlung (MIR; Middle Infra Red) für das berührungsfreie Entgraten.

**8.** Vorrichtung nach Anspruch 7,
**gekennzeichnet durch**
eine Wellenlänge von über 2000nm, besonders bevorzugt von über 2250nm.

**9.** Vorrichtung nach Anspruch 8,
**gekennzeichnet durch**
eine Wellenlänge in einem Wellenlängenbereich von 2000nm bis 7700nm, bevorzugt zwischen 2000nm und 2700nm, besonders bevorzugt zwischen 2200nm und 2500nm.

**10.** Verfahren zum berührungsfreien Entgraten von im Spritzgießverfahren oder im Spritzprägeverfahren aus einem transparenten Werkstoff hergestellten Kunststoffteilen (01) mittels Infrarot-Strahlung, wobei der transparente Werkstoff PMMA umfasst,
**dadurch gekennzeichnet,**
**dass** die Infrarot-Strahlung in Ihrer Wellenlänge derart auf die Absorptionseigenschaften des Werkstoffs des zu entgratenden Kunststoffteils (01) angepasst ist, dass das Maximum der Energie der Infrarot-Strahlung bei einer Wellenlänge liegt, für die der Werkstoff des Kunststoffteils (01) ein Absorptionsmaximum im Infrarot-Bereich aufweist.

**11.** Verfahren nach Anspruch 10,
**dadurch gekennzeichnet,**
**dass** die Wellenlänge der Infrarot-Strahlung in einem Wellenlängenbereich von 2000nm bis 7700nm, bevorzugt zwischen 2000nm und 2700nm, besonders bevorzugt zwischen 2200nm und 2500nm liegt.
